# FASCICULE DE BREVET EUROPEEN

(11) **EP 3 008 296 B1**
(45) Date de publication et mention de la délivrance du brevet: **12.04.2017**
(21) Numéro de dépôt: 14734885.8
(22) Date de dépôt: 11.06.2014
(51) Int. Cl.: F01D 25/18, F02C 7/28

(54) **TOURILLON POUR TURBINE HAUTE PRESSION, ET TURBOREACTEUR INCLUANT UN TEL TOURILLON**
DREHZAPFEN FÜR HOCHDRUCKTURBINE UND STRAHLTRIEBWERK MIT EINEM SOLCHEN DREHZAPFEN
TRUNNION FOR HIGH-PRESSURE TURBINE, AND GAS TURBINE ENGINE INCLUDING SUCH A TRUNNION

(30) Priorité: 12.06.2013 FR 1355443
(43) Date de publication de la demande: 20.04.2016
(73) Titulaire: Snecma, 75015 Paris (FR)
(72) Inventeur: JUDET, Maurice Guy, F-77550 Moissy-Cramayel Cedex (FR); COULOMBEAU, Laurent Jacques Michel, F-77550 Moissy-Cramayel Cedex (FR); GARIN, Fabrice, F-77550 Moissy-Cramayel Cedex (FR)
(74) Mandataire: Regimbeau
(86) Numéro de dépôt international: PCT/FR2014/051420
(87) Numéro de publication internationale: WO 2014/199083

(56) Documents cités:
- EP-A1- 2 090 764
- EP-A2- 1 724 445
- FR-A1- 2 957 976
- US-A1- 2008 063 333

## Description

### DOMAINE DE L'INVENTION

L'invention concerne un tourillon pour turbine haute pression, et un turboréacteur incluant un tel tourillon.

### ETAT DE LA TECHNIQUE

Les turboréacteurs double corps comprennent deux corps rotatifs : un corps basse pression et un corps haute pression, dont les rotations sont indépendantes. Chaque corps inclut un compresseur et une turbine entraînant le compresseur. A cet effet, chaque corps inclut également un arbre reliant la turbine au compresseur pour entrainer le compresseur en rotation.

L'arbre de turbine basse pression relie le compresseur basse pression à la turbine basse pression, L'arbre de compresseur haute pression relie le compresseur haute pression à la turbine haute pression,

Dans un tel turboréacteur, l'arbre de compresseur haute pression s'étend autour de l'arbre de turbine basse pression, de manière concentrique.

Par ailleurs, l'arbre de compresseur haute pression comprend un tourillon d'extrémité agencé au niveau de l'extrémité réceptrice de l'arbre (extrémité reliée à la turbine haute pression). Le tourillon d'extrémité a pour fonction de supporter le palier n°4 disposé entre l'arbre de compresseur haute pression et l'arbre de turbine basse pression.

La lubrification du palier est assurée par une mise en circulation d'huile à travers le palier. Grâce à l'effet centrifuge produit par la rotation de l'arbre de compresseur haute pression, l'huile circule à travers le palier et est évacuée vers l'aval du turboréacteur pour être recyclée.

Lors de la mise en marche d'un tel turboréacteur, on a pu constater l'apparition de fumées.

### RESUME DE L'INVENTION

Un but de l'invention est de réduire les fumées produites lors du démarrage du turboréacteur.

Des investigations menées par les inventeurs ont mis en évidence que la production de fumées était due à une accumulation d'huile dans certaines zones chaudes du turboréacteur, cette accumulation d'huile provenant d'un refoulement de l'huile vers l'amont du turboréacteur, se produisant en particulier lorsque le turboréacteur tourne à bas régime.

Ce problème est résolu dans le cadre de la présente invention grâce à un tourillon pour turbine haute pression, selon la revendication 1, qui est destiné à être disposé entre un arbre de turbine basse pression et une surface interne d'un support de joint de turbine basse pression, le tourillon étant caractérisé en ce qu'il comprend une extension lance-goutte agencée pour s'étendre en regard d'une partie évasée de la surface interne du support de joint, de manière à ce que lorsque le tourillon est entrainé en rotation autour de l'arbre de turbine basse pression, de l'huile tendant à pénétrer entre le tourillon et le support de joint est projetée par effet centrifuge depuis l'extension lance-goutte vers la partie évasée de la surface interne du support de joint.

L'extension lance-goutte permet de projeter l'huile circulant le long du tourillon vers la partie évasée de la surface interne du support de joint, avant que l'huile n'ait pu pénétrer entre le tourillon et le support de joint. Cet agencement limite donc une remontée de l'huile vers l'amont du turboréacteur.

Le tourillon comprend un renfoncement ménagé dans la surface externe du tourillon, le renfoncement stoppant la pénétration de l'huile entre le tourillon et le support de joint et provoquant un décollement de l'huile vers la surface interne du support de joint par effet centrifuge. Le tourillon est remarquable par le fait que l'extension lance-goutte présente une surface externe inclinée par rapport à un axe de rotation du tourillon, tendant à guider l'huile vers le renfoncement par effet centrifuge lorsque le tourillon est entraîné en rotation.

Le tourillon peut en outre présenter les caractéristiques suivantes :
- le renfoncement est une gorge annulaire ménagée dans la surface externe du tourillon,
- le tourillon comprend une série de léchettes radiales propre à former un labyrinthe d'étanchéité entre le tourillon et le support de joint.

L'invention se rapporte en outre à un turboréacteur comprenant un compresseur basse pression, un compresseur haute pression, une turbine haute pression et une turbine basse pression, le turboréacteur comprenant en outre :
- un arbre de turbine basse pression reliant le compresseur basse pression à la turbine basse pression,
- un arbre de compresseur haute pression s'étendant autour de l'arbre de turbine basse pression, et reliant le compresseur haute pression à la turbine haute pression,
dans lequel la turbine basse pression comprend un support de joint présentant une surface interne ayant une partie évasée et l'arbre de compresseur haute pression comprend un tourillon tel que défini précédemment, disposé entre l'arbre de turbine basse pression et la surface interne du support de joint de la turbine basse pression.

### PRESENTATION DES DESSINS

D'autres caractéristiques et avantages ressortiront encore de la description qui suit, laquelle est purement illustrative et non limitative et doit être lue en regard des figures annexées, parmi lesquelles :
- la figure 1 représente de manière schématique, en coupe longitudinale, un turboréacteur double corps,
- la figure 2 représente de manière schématique la circulation de l'huile servant à lubrifier le palier n°4 dans un turboréacteur comprenant un tourillon conventionnel,
- les figures 3 et 4 représentent de manière schématique la circulation de l'huile servant à lubrifier le palier n°4 dans un turboréacteur comprenant un tourillon conforme à un mode de réalisation de l'invention.

### DESCRIPTION DETAILLEE D'UN MODE DE REALISATION

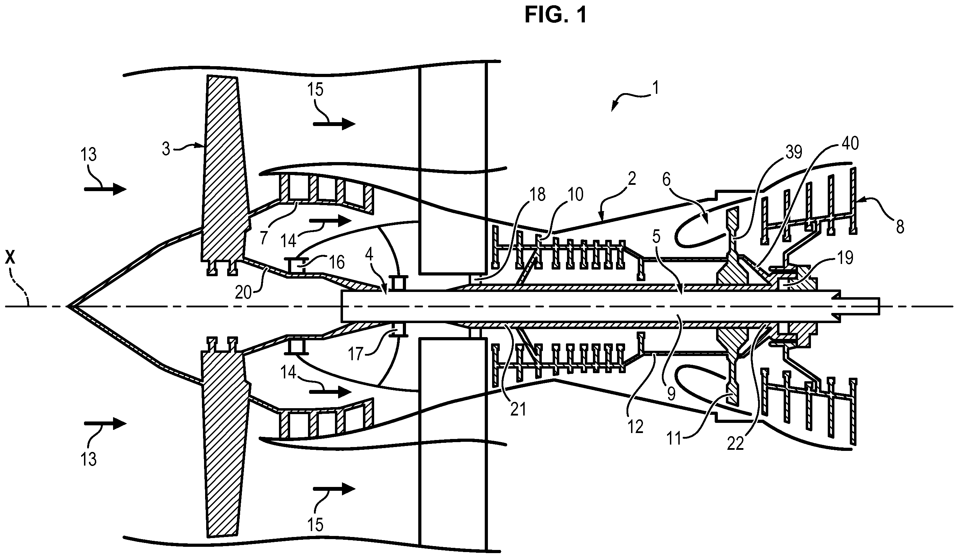

Sur la figure 1, le turboréacteur 1 représenté comprend un carter 2, une soufflante 3, un corps basse pression 4, un corps haute pression 5 et une chambre de combustion 6.

Le corps basse pression 4 comprend un compresseur basse pression 7, une turbine basse pression 8 et un arbre de turbine basse pression 9 reliant le compresseur basse pression 7 à la turbine basse pression 8. L'arbre de turbine basse pression 9 s'étend selon un axe longitudinal X du turboréacteur 1. La turbine basse pression 8 est apte à entrainer en rotation le compresseur basse pression 7 via l'arbre de turbine basse pression 9. L'ensemble du corps basse pression 4 est ainsi entrainé en rotation par rapport au carter 2 autour de l'axe X.

Le corps haute pression 5 comprend un compresseur haute pression 10, une turbine haute pression 11 et un arbre de compresseur haute pression 12 reliant le compresseur haute pression 10 à la turbine haute pression 11. L'arbre de compresseur haute pression 12 s'étend autour de l'arbre de turbine basse pression 9 de manière concentrique à celui-ci (c'est-à-dire centré sur l'axe X). La turbine haute pression 11 est apte à entrainer en rotation le compresseur haute pression 10 via l'arbre de compresseur haute pression 12. L'ensemble du corps haute pression 5 est ainsi entrainé en rotation par rapport au carter 2 autour de l'axe X.

En fonctionnement, les corps basse pression 4 et haute pression 5 sont entrainés en rotation par rapport au carter 2 indépendamment l'un de l'autre. Ainsi, l'arbre de turbine 9 et l'arbre de compresseur 12 sont entrainés en rotation indépendamment l'un de l'autre autour de l'axe longitudinal X du turboréacteur 1.

Lorsque le turboréacteur 1 est en marche, de l'air 13 est aspiré par la soufflante 3 et est divisé en un flux d'air primaire 14 et un flux d'air secondaire 15, qui circulent d'amont en aval du turboréacteur 1.

Le flux d'air primaire 14 s'écoule à travers le turboréacteur 1 d'amont en aval en passant successivement à travers le compresseur basse pression 7, le compresseur haute pression 10, la chambre de combustion 6 où il est mélangé avec du carburant pour être brûlé, la turbine haute pression 11 et la turbine basse pression 8. Le passage du flux d'air primaire 14 à travers la turbine haute pression 11 et la turbine basse pression 8 provoque une rotation des turbines 11 et 8 qui entrainent à leur tour en rotation le compresseur haute pression 10 et le compresseur basse pression 7, ainsi que la soufflante 3, via l'arbre de turbine 9 et l'arbre de compresseur 12.

Les arbres 9 et 12 sont supportés et guidés en rotation par des paliers 16, 17, 18 et 19 qui sont logés dans des chambres-palier pressurisées.

Ainsi, le premier palier 16 et le deuxième palier 17 (appelés respectivement « paliers n°1 » et « palier n°2 ») sont interposés entre un support de disques 20 du compresseur basse pression et le carter 2 du turboréacteur.

Le troisième palier 18 (appelé « palier n°3 ») est disposé à une première extrémité 21 de l'arbre de compresseur haute pression 12, la première extrémité 21 étant reliée à la turbine haute pression 11. Le troisième palier 18 est interposé entre l'arbre de compresseur haute pression 12 et le carter 2.

Le quatrième palier 19 (appelé « palier n°4 ») est disposé à une deuxième extrémité 22 de l'arbre de compresseur haute pression 12, la deuxième extrémité 22 étant reliée au compresseur haute pression 10. Le quatrième palier 19 est interposé entre l'arbre de compresseur haute pression 12 et l'arbre de turbine basse pression 9.

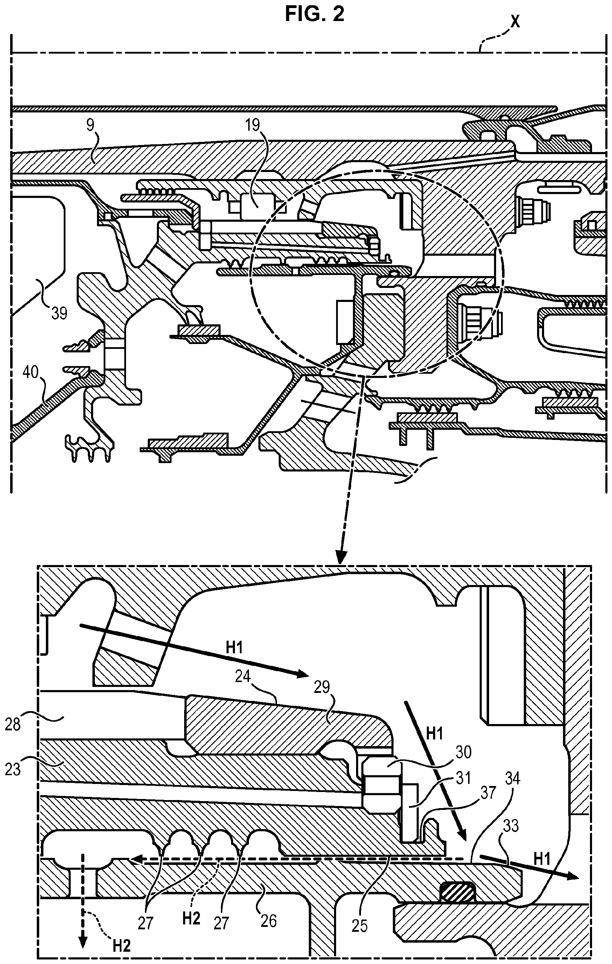

Sur la figure 2, l'arbre de compresseur haute pression 12 comprend au niveau de sa deuxième extrémité 22, un tourillon d'extrémité 23 conventionnel. Le palier 19 est interposé entre l'arbre de turbine basse pression 9 et le tourillon 23 de l'arbre de compresseur haute pression 12.

Le tourillon 23 est fixé au disque 39 de la turbine haute pression 10 par l'intermédiaire d'une bride boulonnée 40. Autrement dit, le tourillon 23 est rendu solidaire en rotation de l'arbre de compresseur haute pression 12 grâce à la bride 40.

Par ailleurs, la bague externe 28 du palier 19 est fixée sur le tourillon par le biais d'un écrou 29 (appelé « écrou palier n°4 »), d'un pion 30 et d'un anneau élastique 31 (circlip) maintenu dans une gorge annulaire 37 du tourillon 23.

L'ensemble tourillon 23 + disque 39 + bague externe 28 + écrou 29 présente une surface interne 24 s'étendant en regard de l'arbre de turbine basse pression 9.

La surface interne 24 est évasée vers l'aval du turboréacteur 1 de manière à guider l'huile H1 circulant le long de sa surface interne 24 vers l'aval du turboréacteur par effet centrifuge lorsque l'arbre de compresseur haute pression 12 est entrainé en rotation. L'huile H1 servant à lubrifier le palier 19 est ainsi évacuée vers la chambre-palier en vue d'être recyclée.

De plus, le tourillon 23 présente une surface externe 25 s'étendant en regard d'une surface interne 34 du support de joint 26 de la turbine basse pression 8.

La surface externe 25 du tourillon 23 comprend une série de léchettes radiales 27 formant un labyrinthe d'étanchéité entre le tourillon 23 et le support de joint 26 de la turbine basse pression 8.

De plus, de l'air est injecté entre la surface externe 25 du tourillon et la surface interne 34 du support de joint afin de maintenir sous pression la chambre-palier du palier 19.

Le support de joint 26 de la turbine basse pression 8 présente également une surface interne 34 ayant une partie évasée 33 vers l'aval du turboréacteur 1 de manière à guider l'huile H1 circulant le long de sa surface interne 34 vers l'aval du turboréacteur par effet centrifuge.

Comme cela est illustré sur la figure 2, il a été constaté que lorsque l'arbre haute pression 12 est entrainé en rotation autour de l'axe X, de l'huile H2 peut pénétrer entre le tourillon 23 et le support de joint 26, en remontant le long du support de joint 26 vers l'aval du turboréacteur 1. L'huile H2 peut ainsi infiltrer des parties chaudes du turboréacteur 1 et provoquer l'apparition de fumées indésirables. Ce phénomène a été constaté en particulier lorsque le turboréacteur 1 fonctionne à bas régime, et que l'effet centrifuge ne suffit pas à contrer la pénétration de l'huile H2 entre le tourillon 23 et le support de joint 26.

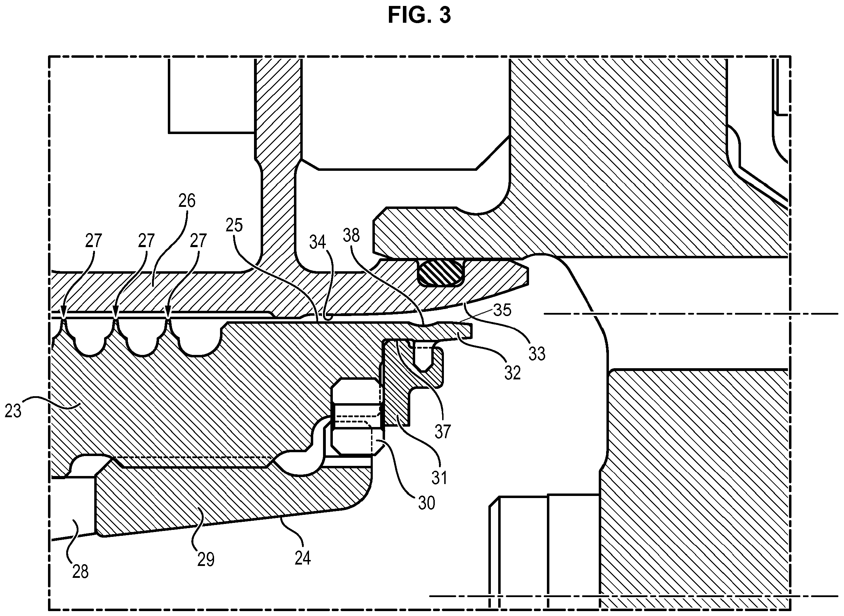

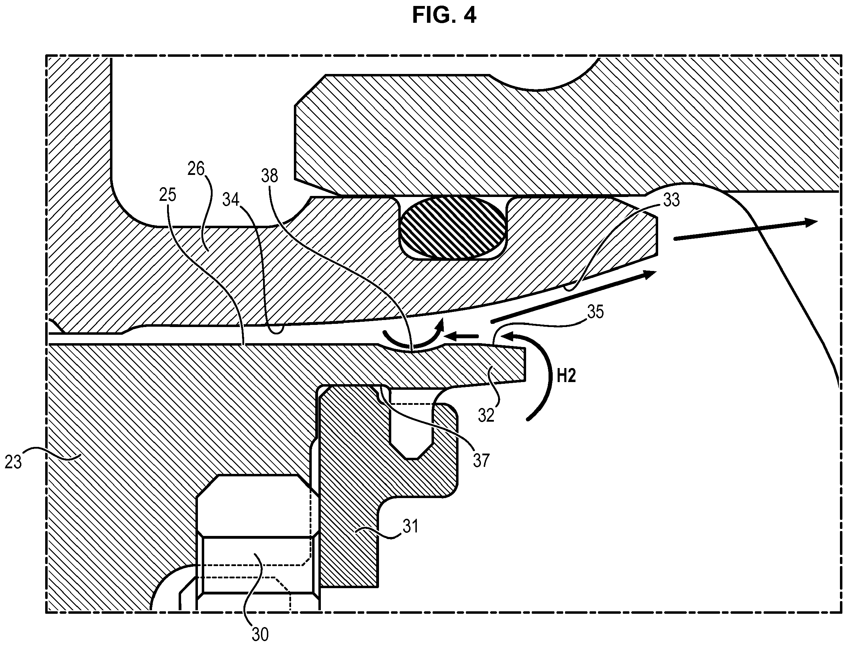

Sur les figures 3 et 4, l'arbre de compresseur haute pression 12 comprend un tourillon d'extrémité 23 conforme à un mode de réalisation de l'invention.

Le palier 19 est interposé entre l'arbre de turbine basse pression 9 et le tourillon 23 de l'arbre de compresseur haute pression 12.

Le tourillon 23 représenté sur les figures 3 et 4 diffère du tourillon 23 de la figure 2, en ce qu'il comprend une extension lance-goutte 32 s'étendant en regard de la partie évasée 33 de la surface interne 34 du support de joint 26.

L'extension lance-goutte 32 s'étend au-delà de la gorge annulaire 37 ménagée dans le tourillon 23 pour recevoir l'anneau élastique 31.

De cette manière, lorsque le tourillon 23 est entrainé en rotation autour de l'arbre de turbine basse pression 9, de l'huile H2 tendant à pénétrer entre la surface externe 25 du tourillon 23 et la surface interne 34 du support de joint 26 est projetée par effet centrifuge depuis l'extension lance-goutte 32 vers la partie évasée 33 de la surface interne 34 du support de joint 26.

L'huile H2 est ensuite guidée, par effet centrifuge, le long de la surface interne 33 du support de joint vers l'aval du turboréacteur 1 pour être recyclée.

De plus, le tourillon 23 comprend un renfoncement 38 ménagé dans la surface externe 25 du tourillon, le renfoncement 38 étant réalisé sous la forme d'une gorge annulaire.

La gorge annulaire 38 stoppe la pénétration de l'huile H2 entre la surface externe 25 du tourillon 23 et la surface interne 34 du support de joint 26 en provoquant un décollement de l'huile vers la partie évasée 33 de la surface interne 34 du support de joint 26 par effet centrifuge.

De plus, l'extension lance-goutte 32 présente une surface externe 35 inclinée par rapport à l'axe de rotation X de l'arbre de compresseur haute pression 12. L'inclinaison de la surface externe 35 est telle que la surface externe 35 tend à guider l'huile H2 vers le renfoncement 38 par effet centrifuge lorsque le tourillon 23 est entrainé en rotation.

Enfin, le tourillon 23 comprend une série de léchettes radiales 27 formant un labyrinthe d'étanchéité entre la surface externe 25 du tourillon 23 et la surface interne 34 du support de joint 26.

## Revendications

1. Tourillon (23) pour turbine haute pression (11), destiné à être disposé entre un arbre de turbine basse pression (9) et une surface interne (34) d'un support de joint (26) de turbine basse pression (8), le tourillon (23) comprenant une extension lance-goutte (32) agencée pour s'étendre en regard d'une partie évasée (33) de la surface interne (34) du support de joint (26), de manière à ce que lorsque le tourillon (23) est entrainé en rotation autour de l'arbre de turbine basse pression (9), de l'huile (H2) tendant à pénétrer entre le tourillon (23) et le support de joint (26) est projetée par effet centrifuge depuis l'extension lance-goutte (32) vers la partie évasée (33) de la surface interne (34) du support de joint (26), le tourillon comprenant en outre un renfoncement (38) ménagé dans la surface externe (25) du tourillon (23), le renfoncement (38) stoppant la pénétration de l'huile (H2) entre le tourillon (23) et le support de joint (26) et provoquant un décollement de l'huile (H2) vers la surface interne (34) du support de joint (26) par effet centrifuge, dans lequel l'extension lance-goutte (32) présente une surface externe (35) inclinée par rapport à un axe de rotation (X) du tourillon (23), tendant à guider l'huile (H2) vers le renfoncement (38) par effet centrifuge lorsque le tourillon (23) est entrainé en rotation.

2. Tourillon selon la revendication 1, dans lequel le renfoncement (38) est une gorge annulaire ménagée dans la surface externe (25) du tourillon (23).

3. Tourillon selon l'une des revendications qui précèdent, comprenant une série de léchettes radiales (27) propre à former un labyrinthe d'étanchéité entre le tourillon (23) et le support de joint (26).

4. Turboréacteur (1) comprenant un compresseur basse pression (7), un compresseur haute pression (10), une turbine haute pression (11) et une turbine basse pression (8), le turboréacteur (1) comprenant en outre :
- un arbre de turbine basse pression (9) reliant le compresseur basse pression (7) à la turbine basse pression (8),
- un arbre de compresseur haute pression (12) s'étendant autour de l'arbre de turbine basse pression (9), et reliant le compresseur haute pression (10) à la turbine haute pression (11),
dans lequel la turbine basse pression (8) comprend un support de joint (26) présentant une surface interne (34) ayant une partie évasée (33) et la turbine haute pression (11) comprend un tourillon (23) conforme à l'une des revendications 1 à 3, disposé entre l'arbre de turbine basse pression (9) et la surface interne (34) du support de joint (26) de la turbine basse pression (9).

## Patentansprüche

1. Drehzapfen (23) für Hochdruckturbine (11), der bestimmt ist, zwischen einer Niederdruckturbinenwelle (9) und einer Innenfläche (34) einer Dichtungsunterlage (26) der Niederdruckturbine (8) angeordnet zu sein, wobei der Drehzapfen (23) eine Tropfenwerfererweiterung (32) umfasst, die ausgebildet ist, um sich gegenüber einem erweiterten Teil (33) der Innenfläche (34) der Dichtungsunterlage (26) derart zu erstrecken, dass, wenn der Drehzapfen (23) rotierend um die Niederdruckturbinenwelle (9) angetrieben wird, das Öl (H2), das dazu neigt, zwischen den Drehzapfen (23) und die Dichtungsunterlage (26) einzudringen, durch Zentrifugaleffekt von der Tropfenwerfererweiterung (32) zum erweiterten Teil (33) der Innenfläche (34) der Dichtungsunterlage (26) projiziert wird, wobei der Drehzapfen ferner eine Vertiefung (38) umfasst, die in der Außenfläche (25) des Drehzapfens (23) ausgebildet ist, wobei die Vertiefung (38) das Eindringen des Öls (H2) zwischen den Drehzapfen (23) und die Dichtungsunterlage (26) stoppt und ein Lösen des Öls (H2) zur Innenfläche (34) der Dichtungsunterlage (26) durch Zentrifugaleffekt bewirkt, wobei die Tropfenwerfererweiterung (32) eine in Bezug zu einer Rotationsachse (X) des Drehzapfens (23) geneigte Außenfläche (35) aufweist, die dazu neigt, das Öl (H2) zur Vertiefung (38) durch Zentrifugaleffekt zu führen, wenn der Drehzapfen (23) rotierend angetrieben wird.

2. Drehzapfen nach Anspruch 1, wobei die Vertiefung (38) eine ringförmige Nut ist, die in der Außenfläche (25) des Drehzapfens (23) ausgebildet ist.

3. Drehzapfen nach einem der vorangehenden Ansprüche, umfassend eine Reihe radialer Abstreifer (27), die imstande sind, ein Dichtungslabyrinth zwischen dem Drehzapfen (23) und der Dichtungsunterlage (26) zu bilden.

4. Strahltriebwerk (1), umfassend einen Niederdruckkompressor (7), einen Hochdruckkompressor (10), eine Hochdruckturbine (11) und eine Niederdruckturbine (8), wobei das Strahltriebwerk (1) ferner umfasst:
- eine Niederdruckturbinenwelle (9), die den Niederdruckkompressor (7) mit der Niederdruckturbine (8) verbindet,
- eine Hochdruckkompressorwelle (12), die sich um die Niederdruckturbinenwelle (9) erstreckt und den Hochdruckkompressor (10) mit der Hochdruckturbine (11) verbindet,
wobei die Niederdruckturbine (8) eine Dichtungsunterlage (26) umfasst, die eine Innenfläche (34) aufweist, die einen erweiterten Teil (33) hat, und die Hochdruckturbine (11) einen Drehzapfen (23) nach einem der Ansprüche 1 bis 3 aufweist, der zwischen der Niederdruckturbinenwelle (9) und der Innenfläche (34) der Dichtungsunterlage (26) der Niederdruckturbine (9) angeordnet ist.

## Claims

1. A trunnion (23) for high-pressure turbine (11), intended to be positioned between a low-pressure turbine shaft (9) and an inner surface (34) of a seal support (26) of a low-pressure turbine (8), the trunnion (23) comprising a drop-launching extension (32) arranged to extend facing a flared portion (33) of the inner surface (34) of the seal support (26), such that when the trunnion (23) is driven in rotation around the low-pressure turbine shaft (9), oil (H2) tending to penetrate between the trunnion (23) and the seal support (26) is projected by centrifugal effect from the drop-launching extension (32) towards the flared portion (33) of the inner surface (34) of the seal support (26), the trunnion further comprising a recess (38) arranged in the outer surface (25) of the trunnion (23), the recess (38) stopping penetration of the oil (H2) between the trunnion (23) and the seal support (26) and causing detachment of the oil (H2) towards the inner surface (34) of the seal support (26) by centrifugal effect, wherein the drop-launching extension (32) has an outer surface (35) tilted relative to an axis of rotation (X) of the trunnion (23), tending to guide the oil (H2) towards the recess (38) by centrifugal effect when the trunnion (23) is driven in rotation.

2. The trunnion according to claim 1, wherein the recess (38) is an annular groove arranged in the outer surface (25) of the trunnion (23).

3. The trunnion according to one of the preceding claims, comprising a series of radial flanges (27) suitable for forming a sealing labyrinth between the trunnion (23) and the seal support (26).

4. A turbojet engine (1) comprising a low-pressure compressor (7), a high-pressure compressor (10), a high-pressure turbine (11) and a low-pressure turbine (8), the turbojet engine (1) further comprising:
- a low-pressure turbine shaft (9) connecting the low-pressure compressor (7) to the low-pressure turbine z
- a high-pressure compressor shaft (12) extending around the low-pressure turbine shaft (9), and connecting the high-pressure compressor (10) to the high-pressure turbine (11),
wherein the low-pressure turbine (8) comprises a seal support (26) presenting an inner surface (34) having a flared portion (33) and the high-pressure turbine (11) comprises a trunnion (23) according to one of claims 1 to 3, positioned between the low-pressure turbine shaft (9) and the inner surface (34) of the seal support (26) of the low-pressure turbine (9).
